# EUROPÄISCHE PATENTSCHRIFT

(11) **EP 2 117 778 B1**
(45) Veröffentlichungstag und Bekanntmachung des Hinweises auf die Patenterteilung: **26.03.2014**
(21) Anmeldenummer: 08708048.7
(22) Anmeldetag: 21.01.2008
(51) Int. Cl.: B25B 29/02

(54) **VERFAHREN UND VORRICHTUNG ZUM ZUSAMMENFÜGEN VON BAUTEILEN DURCH SPANNBOLZEN**
METHOD AND DEVICE FOR JOINING COMPONENTS BY MEANS OF TENSIONING BOLTS
PROCÉDÉ ET DISPOSITIF D'ASSEMBLAGE DE COMPOSANTS AU MOYEN DE BOULONS DE TENSION

(30) Priorität: 02.02.2007 DE 102007005284
(43) Veröffentlichungstag der Anmeldung: 18.11.2009
(73) Patentinhaber: Wagner Vermögensverwaltungs-GmbH & Co. KG, 53804 Much (DE)
(72) Erfinder: THELEN, Bernd, 53804 Much (DE); SITTIG, Ulf, 51588 Nümbrecht (DE); ANDRES, Günter, 53804 Much (DE); WAGNER, Paul Heinz, 53804 Much-Birrenbachshöhe (DE)
(74) Vertreter: von Kreisler Selting Werner
(86) Internationale Anmeldenummer: PCT/EP2008/050649
(87) Internationale Veröffentlichungsnummer: WO 2008/092768

(56) Entgegenhaltungen:
- WO-A-82/00851
- WO-A-03/047811
- WO-A-2005/118225
- WO-A-2006/105931
- DE-A1- 3 417 173
- DE-B3-102004 043 146
- US-A1- 2004 261 583

## Beschreibung

Die Erfindung betrifft ein Verfahren zum Zusammenfügen von Bauteilen durch Spannbolzen mit den Schritten
- Anbringen eines Spannbolzens an den zu verbindenden Bauteilen
- Aufdrehen einer Mutter auf den Spannbolzen
- Dehnen des Spannbolzens mit einer hydraulischen Spannvorrichtung, die an den Bauteilen abgestützt ist und an dem die Mutter am überragenden Ende des Spannbolzens angreift, und
- Beidrehen der Mutter bis zur Anlage an einem der Bauteile.

Häufig müssen Bauteile unter Verwendung von vorgespannten Spannbolzen zusammengefügt werden. Dies ist beispielsweise bei Reaktorflanschen oder bei Befestigung eines Bauteils auf einem Fundament der Fall. Üblicherweise wird ein Spannbolzen mit einer hydraulischen Spannvorrichtung gedehnt und auf diesen wird unter Aufrechterhaltung der Dehnung eine Mutter aufgeschraubt. Die Mutter wird bis zur Anlage an einem der zu verbindenden Bauteile beigedreht.

Aus WO 2006/105931 A2 sind ein Verfahren gemäß dem Oberbegriff von Anspruch 1 und eine Vorrichtung gemäß dem Oberbegriff von Anspruch 6 bekannt.

Ein derartiges Verfahren zur Erzeugung und Aufrechterhaltung einer Vorspannung in einem Spannbolzen ist jedoch unzulänglich, weil die zu verbindenden Bauteile ein Setzverhalten haben. Erfolgt nach einer Dehnung des Schraubbolzens das Beidrehen der Mutter zu früh, geht ein Teil der Vorspannung durch einen nachfolgenden Setzvorgang der Bauteile wieder verloren, so dass letztlich der Spannbolzen eine zu geringe Vorspannkraft hat.

Der Erfindung liegt die Aufgabe zugrunde, ein Verfahren zum Zusammenfügen von Bauteilen durch Spannbolzen anzugeben, das die Einhaltung einer gewünschten Vorspannung verbessert und den Einfluss des Setzverhaltens weitgehend beseitigt.

Das erfindungsgemäße Verfahren ist durch den Patentanspruch 1 definiert. Hiernach ist vorgesehen, dass der Hydraulikdruck der Spannvorrichtung überwacht wird, dass während des Dehnens bei Erreichen eines Zielwertes des Hydraulikdruckes eine hydraulische Absperrung der Spannvorrichtung erfolgt und dass bei einem Druckabfall während der Absperrung ein erneuter Druckaufbau durch Nachpumpen vorgenommen wird.

Die Erfindung geht von dem Gedanken aus, dass das Setzverhalten der zu verschraubenden Bauteile abgeschlossen sein sollte, bevor das Beidrehen der Mutter erfolgt, also das weitgehend kraftfreie lose Drehen der Mutter bis zur Anlage an dem Bauteil. Hierzu wird der Druckverlauf der hydraulischen Spannvorrichtung überwacht. Während des Spannvorgangs baut sich der Druck an der Spannvorrichtung im wesentlichen linear mit der Zeit auf. Bei Erreichen eines Zielwertes des Drucks erfolgt eine Absperrung der Spannvorrichtung. Dies bedeutet, dass das Volumen des Hydraulikraumes im wesentlichen konstant gehalten wird und dass keine Flüssigkeit nachgepumpt wird, jedoch auch keine Flüssigkeit entweichen kann. Wenn in diesem Zustand ein Setzvorgang erfolgt, geht ein Teil der Vorspannung verloren. Dadurch vergrößert sich das ölgefüllte Volumen der Spannvorrichtung und der hydraulische Druck der Spannvorrichtung verringert sich. Fällt der Druck unter den unteren Grenzwert ab, so erfolgt ein erneuter Druckaufbau bis der Zielwert wieder erreicht ist. Auf diese Weise werden die schädlichen Auswirkungen eines Setzvorganges eliminiert. Damit wird gewährleistet, dass die Zugkraft der Spannvorrichtung in den Spannbolzen eingeleitet wird, so dass das Fügeverhalten der Bauteile die erzielbare Vorspannung nicht wesentlich beeinträchtigt. Ist der Druck innerhalb einer definierten Zeit, die als Haltezeit bezeichnet wird, innerhalb eines definierten Fensters konstant, leuchtet eine Signalleuchte auf, die dem Werker angibt, dass nunmehr das Beidrehen der Mutter erfolgen kann. Nach dem Beidrehen der Mutter wird der Druck abgesenkt und die Spannvorrichtung kann entfernt werden.

Der logische Ablauf des Verfahrens ist von den einzelnen Schritten abhängig. Zur Durchführung eines folgenden Arbeitsschrittes ist der Abschluss des vorherigen Arbeitsschrittes Startbedingung. Dies verhindert Fehlbedienungen.

Im Rahmen des erfindungsgemäßen Verfahrens kann auch eine elektronische Aufzeichnung bzw. Dokumentation erfolgen. Gemäß einer Weiterbildung der Erfindung ist vorgesehen, dass eine elektronische Aufzeichnung der folgenden Parameter durchgeführt wird:
a) Zeitdauer des Druckaufbaus bis zum Erreichen des Zielwertes,
b) Ob ein Nachpumpen erfolgt ist.

Auf diese Weise kann für jeden Spannbolzen festgehalten werden, wie die Montage erfolgt ist bzw. ob hierbei Besonderheiten aufgetreten sind. Dies ist unter Umständen wichtig für einen späteren Nachweis, dass die Spannschrauben mit der erforderlichen Vorspannung tatsächlich montiert worden sind.

Die Längung des Spannbolzens während eines Spannvorganges kann ermittelt werden, indem die Menge des in die Spannvorrichtung gepumpten Hydrauliköls bestimmt wird. Somit kann der Verfahrweg des Kolbens im Spannzylinder einer hydraulischen Spannvorrichtung über die Ölfördermenge mittels Mikroprozessor und Drucksensoren berechnet werden.

Die Erfindung betrifft ferner eine Vorrichtung zum Zusammenfügen von Bauteilen durch Spannbolzen, mit einer hydraulischen Spannvorrichtung, die einen Spannzylinder aufweist, einem Hydraulikaggregat zur Erzeugung des Druckes für die Spannvorrichtung und einem Steuergerät, an dem ein Zielwert des Druckes einstellbar ist.

Erfindungsgemäß ist die Vorrichtung dadurch gekennzeichnet, dass das Steuergerät das Hydraulikaggregat derart steuert, dass dieses nach Erreichen des Zielwertes eine Absperrung der Spannvorrichtung für eine vorgegebene Haltezeit durchführt und dass das Steuergerät das Hydraulikaggregat wieder aktiviert, wenn innerhalb der Haltezeit der Druck unter einen unteren Grenzwert abfällt.

Eine derartige Vorrichtung kann sowohl zum Spannen einzelner Spannbolzen als auch zum gleichzeitigen Spannen einer Gruppe von Spannbolzen benutzt werden. Das elektronische Steuergerät stellt sicher, dass die genaue Erzeugung bzw. Einstellung der Vorspannung erst nach Abschluss des Setzverhaltens folgt.

Im Folgenden wird unter Bezugnahme auf die Zeichnungen ein Ausführungsbeispiel der Erfindung näher erläutert,

Es zeigen:
- Fg. 1: einen Längsschnitt einer Spannvorrichtung zum Dehnen eines Schraubbolzens zum Zwecke des Beidrehens einer Mutter,
- Fig. 2: einen anderen Längsschnitt der Spannvorrichtung nach Figur 1,
- Fig. 3: den zeitlichen Verlauf des Druckes der Spannvorrichtung während eines Spannvorganges,
- Fig. 4: den Einsatz zahlreicher Spannvorrichtungen, die durch ein Druckaggregat betrieben und gesteuert werden und
- Fig. 5: eine Draufsicht der in Figur 3 dargestellten Anordnung aus Richtung des Pfeiles IV.

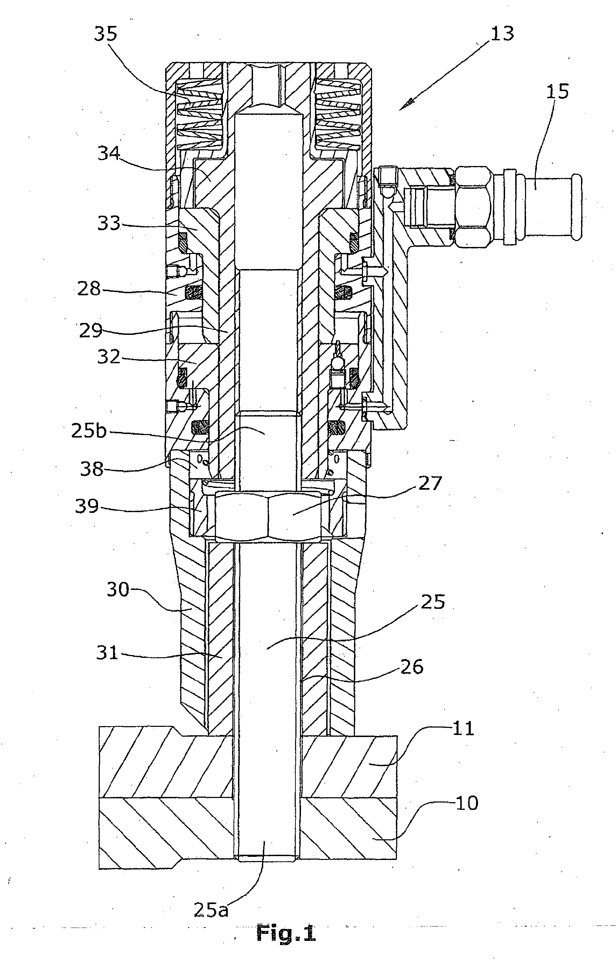

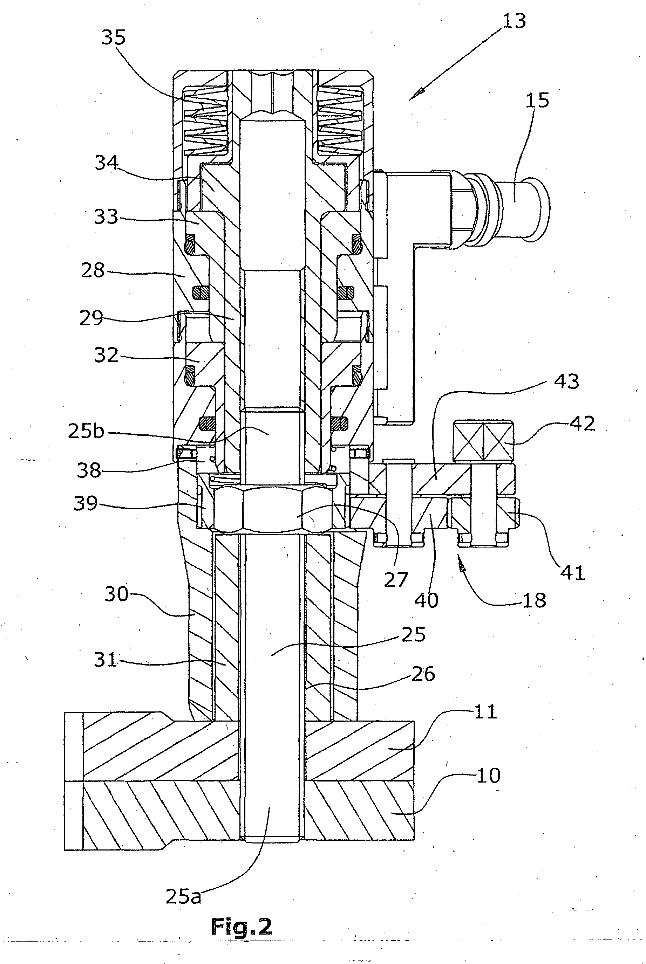

Die in den Figuren 1 und 2 dargestellte Spannvorrichtung 13 dient dazu, zwei Bauteile 10, 11, die gegeneinanderliegende Anlageflächen aufweisen, durch einen Spannbolzen 25 zu verbinden, indem auf das Gewinde 26 des Spannbolzens 25 eine Mutter 27 aufgedreht wird. Der Spannbolzen 25 ist an einem Ende 25a mit dem einen Bauteil 10 verbunden bzw. an diesem abgestützt, während auf das andere Ende 25b eine Zugspannung ausgeübt wird. Die Spannvorrichtüng 13 weist ein Gehäuse 28 auf, welches eine Zugbuchse 29 enthält, die mit einem Innengewinde auf das Außengewinde des rückwärtigen Endes 25b des Schraubbolzens aufgeschraubt ist. Das Gehäuse 28 stützt sich mit einer Hülse 30 an dem Bauteil 11 ab. Durch die Hülse 30 verläuft eine Distanzbuchse 31, die den Spannbolzen 25 umgibt. Gegen das rückwärtige Ende der Distanzbuchse 31 wird die Mutter 27 gedreht. Die Distanzbuchse 31 nimmt die Dehnkraft des Spannbolzens 25 auf und wird zwischen Mutter 27 und Bauteil 11 axial komprimiert.

Auf die Zugbuchse 29 wirken zwei hydraulische Kolben 32, 33, die in entsprechenden Zylinderräumen des Gehäuses 28 angeordnet sind und die Zugbuchse 29 umgeben. Die Kolben 32 und 33 drücken gegen einen Flansch 34 der Zugbuchse 29, wodurch eine Feder 35 komprimiert wird, die im Endbereich des Gehäuses 28 angeordnet ist. Der Antrieb der Kolben 32, 33 erfolgt über Hydrauliköl, das über den Schlauchanschluss 15 zugeführt wird. Die Hydraulikanschlüsse sind um die Längsachse des Gehäuses herum schwenkbar.

Die Hülse 30 enthält am rückwärtigen Ende einen Aufnahmeraum 38, in welchem ein Ringrad 39 angeordnet ist. In das Ringrad 39 ist die Mutter 27 passend eingesetzt, so dass sie drehfest mit dem Ringrad verbunden ist. Das Ringrad 39 weist eine Außenverzahnung auf, die mit einem Zahnrad 40 kämmt (Figur 2). Das Zahnrad 40 kämmt seinerseits mit einem weiteren Zahnrad 41, dessen Achse mit einem Mehrkant 42 verbunden ist. Die Zahnräder 40, 41 sind an einem Auslegerarm 43 drehbar gelagert, der von der Hülse 30 radial absteht. Durch Ansetzen eines Werkzeugs an den Mehrkant 42 kann über die Zahnräder 41 und 40 das Ringrad 39 mit der Mutter 27 gedreht werden.

Die Benutzung der Spannvorrichtung erfolgt in der Weise, dass der Spannbolzen 25 in das äußere Bauteil 10 eingeschraubt wird und das innere Bauteil 11 wird über den Schraubbolzen geschoben. Dann wird die Distanzbuchse 31 auf den Schraubbolzen aufgeschoben und die Mutter 27 wird lose angedreht. Die Spannvorrichtung 13 wird aufgesetzt, indem die Hülse 30 über die Distanzbuchse 31 Zugbuchse 29 gedreht und auf das rückwärtige Ende 25b des Spannbolzens 25 aufgeschraubt. Nun erfolgt die Druckbeaufschlagung der Kolben 32, 33, wodurch der Spannbolzen 25 gedehnt wird. Durch Drehen des Mehrkants 42 kann die Mutter 27 beigedreht werden, indem sie so weit geschraubt wird, dass sie gegen das rückwärtige Ende der Distanzbuchse 31 stößt. Wird nun die Spannvorrichtung druckentlastet, so wird der Spannbolzen 25 durch die Distanzbuchse 31 gedehnt und somit vorgespannt.

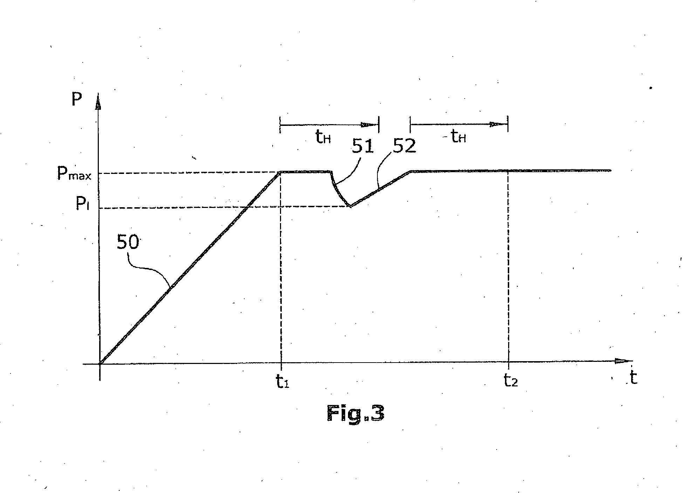

Figur 3 zeigt den Verlauf des Druckes P an der Spannvorrichtung in Abhängigkeit von der Zeit t. Beim Dehnen des Schraubbolzens erhöht sich der Druck P in einem Abschnitt 50 im wesentlichen linear. Dies ist auf die Elastizität des Schraubbolzens und der von dem Druckaggregat zur Spannvorrichtung führenden Schläuche zurückzuführen. Wenn der Zielwert Pₘₐₓ des Druckes erreicht ist, wird das Drücksystem der Spannvorrichtung von dem Hydraulikaggregat abgesperrt. Dies bedeutet, dass dem Verbrauchervolumen kein Hydrauliköl mehr zugeführt wird, und dass auch kein Hydrauliköl daraus entweichen kann. Zum Zeitpunkt t1 des Erreichens des Zielwertes Pₘₐₓ beginnt im Steuergerät eine Haltezeit t_{H} zu laufen, in der der Absperrzustand aufrechterhalten bleibt. Der Verlauf 51 in Figur 2 gibt an, dass ein Setzvorgang erfolgt, bei dem die Bauteile sich gegeneinander bewegen. Die Folge ist ein Abfall des Druckes P. Wenn der Druck P auf einen unteren Grenzwert P₁ abgesunken ist, nimmt das Hydraulikaggregat den Pumpvorgang wieder auf und es entsteht ein Abschnitt 52, in dem der Druck wieder im wesentlichen linear bis auf den Zielwert Pₘₐₓ ansteigt. Nach Erreichen des Zielwertes beginnt eine neue Haltezeit t_{H} zu laufen. Die Haltezeit hat einen vorbestimmten konstanten Wert. Wenn innerhalb der zweiten Haltezeit kein neuer Setzvorgang erfolgt, wird nach Ablauf der zweiten Haltezeit zum Zeitpunkt t₂ ein Signal zum Beidrehen der Mutter erzeugt. Dieses Signal gibt dem Werker an, dass nunmehr das Beidrehen der Mutter erfolgen kann. Wenn innerhalb der zweiten Haltezeit t_{H} ein neuer Setzvorgang erfolgt, der nicht bis zu dem unteren Grenzwert P_{I} reicht, wird der jeweilige Druck unterhalb von Pₘₐₓ beibehaiten. Sinkt bei dem neuen Setzvorgang aber der Druck P unter den Grenzwert P_{I} ab, erfolgt ein erneutes Hochpumpen, wie bei dem Abschnitt 52.

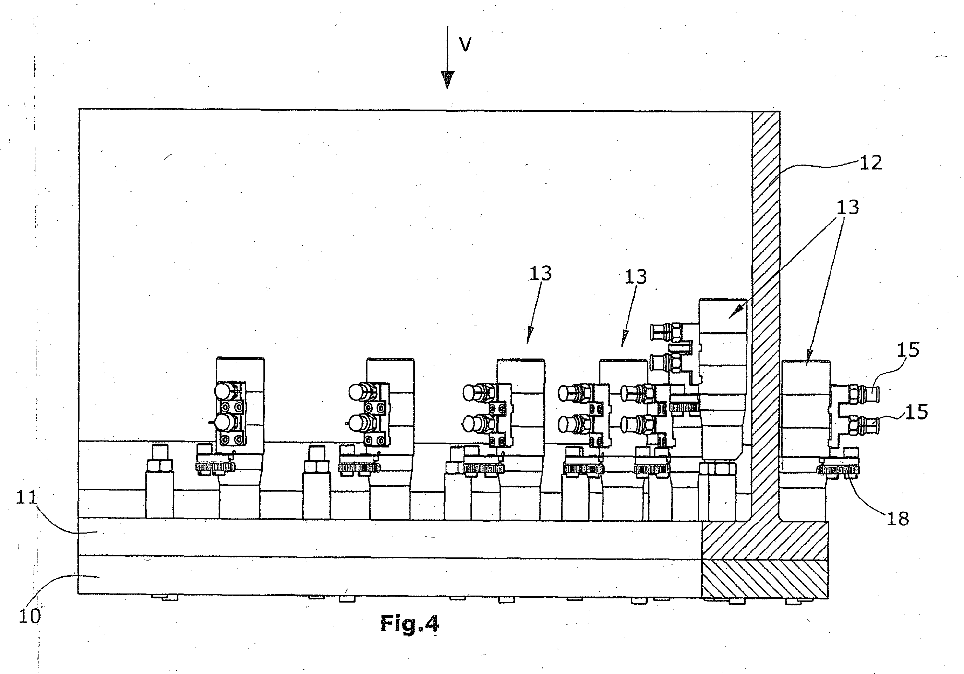

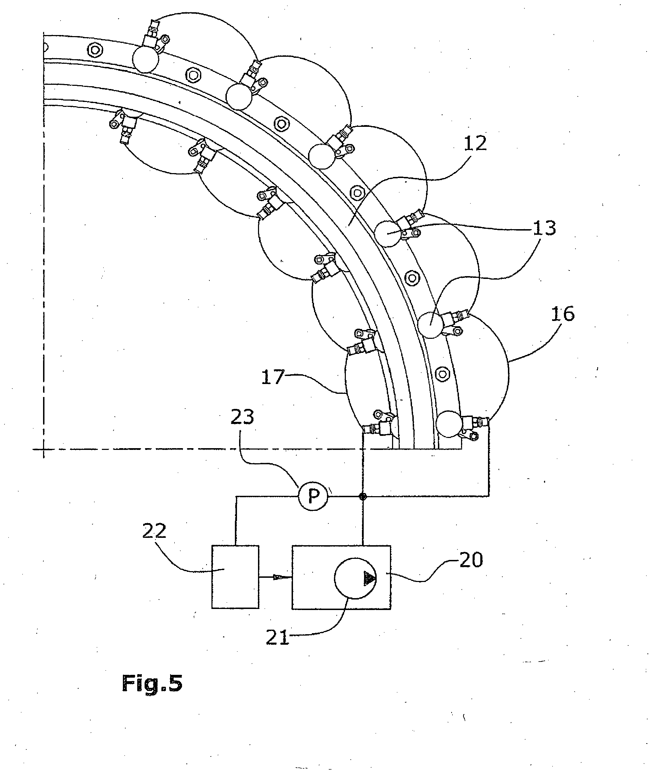

Die Figuren 4 und 5 zeigen ein Beispiel mit zahlreichen Spannvorrichtungen. Die zu verbindenden Bauteile 10, 11 sind hier Flansche, von denen einer mit einer Gehäusewand 12 verbunden ist. Ein Teil der Spannvorrichtungen 13 befindet sich außerhalb der Gehäusewand 12, also auf der Außenseite des Gehäuses, und ein anderer Teil der Spannvorrichtungen befindet sich auf der Innenseite. Jede der Spannvorrichtungen 13 weist einen Schlauchanschluss 15 auf, der mit dem Hydraulikaggregat durch einen Schlauch 16 bzw. 17 verbunden ist. Die Spannvorrichtungen sind in hydraulischer Parallelschaltung an das Hydraulikaggregat 20 angeschlossen.

Das Hydraulikaggregat 20 enthält eine Pumpe 21, die von einem Motor angetrieben ist. Die Pumpe ist eine volumetrische Pumpe, deren Fördermenge der Drehzahl des Motors proportional ist. Die Steuerung des Motors erfolgt durch ein Steuergerät 22, das mit verschiedenen Sensoren verbunden ist. Einer dieser Sensoren ist ein Drucksensor 23, der an die Druckleitung des Hydraulikaggregates angeschlossen ist. Das Drucksignal des Drucksensors 23 wird an das Steuergerät 22 geliefert und dieses steuert das Hydraulikaggregat 20, entsprechend den anhand von Figur 2 erläuterten Kriterien.

Das elektronische Steuergerät 22 halt auch eine Speicherfunktion, um die oben schon erläuterte Dokumentation eines Spannvorgangs vorzunehmen. Ferner hat das Steuergerät Signallampen, mit denen u. a. ein Signal zum Beidrehen der Mutter erzeugt werden kann. Das Beidrehen der Mutter erfolgt durch Bewegen eines Drehantriebs 18 der Spannvorrichtung 13.

## Patentansprüche

1. Verfahren zum Zusammenfügen von Bauteilen (10, 11) durch Spannbolzen, mit den Schritten
- Anbringen eines Spannbolzens (25) an den zu verbindenden Bauteilen (10,11),
- Aufdrehen einer Mutter (27) auf den Spannbolzen,
- Dehnen des Spannbolzens mit einer hydraulischen Spannvorrichtung (13), die an den Bauteilen abgestützt ist und an der das die Mutter überragende Ende des Spannbolzens angreift, und
- Beidrehen der Mutter (27) bis zur Anlage an einem der Bauteile (10, 11),
wobei der Hydraulikdruck (P) der Spannvorrichtung (13) überwacht wird, und wobei während des Dehnens bei Erreichen eines Zielwertes (Pₘₐₓ) des Hydraulikdruckes eine hydraulische Absperrung der Spannvorrichtung (13) erfolgt,
**dadurch gekennzeichnet,**
**dass** bei einem Druckabfall während der Absperrung ein erneuter Druckaufbau durch Nachpumpen vorgenommen wird.

2. Verfahren nach Anspruch 1, **dadurch gekennzeichnet, dass** bei Beginn der Absperrung eine Zeitmessung gestartet wird, und dass ein Signal zum Beidrehen der Mutter erzeugt wird, wenn innerhalb einer vorgegebenen Haltezeit (t_{H}) nach Beginn der Zeitmessung kein Druckabfall unter einen unteren Grenzwert erfolgt.

3. Verfahren nach Anspruch 1 oder 2, **dadurch gekennzeichnet, dass** eine elektronische Aufzeichnung der folgenden Parameter erfolgt:
a) Zeitdauer des Druckaufbaus bis zum Erreichen des Zielwertes,
b) Höhe des Drucks und/oder zeitlicher Druckverlauf,
c) ob ein Nachpumpen erfolgt ist.

4. Verfahren nach einem der Ansprüche 1 - 3, **dadurch gekennzeichnet, dass** die Längung des Schraubbolzens ermittelt wird, indem die Menge des in die Spannvorrichtung gepumpten Hydrauliköls bestimmt wird.

5. Verfahren nach einem der Ansprüche 1 - 4, **dadurch gekennzeichnet, dass** die hydraulische Spannvorrichtung (13) mindestens einen Kolben (32, 33) enthält, der in einem Spannzylinder bewegbar ist und dass der Verfahrweg des Kolbens über die Ölfördermenge mittels Mikroprozessor und Drucksensoren berechnet wird.

6. Vorrichtung zum Zusammenfügen von Bauteilen durch Spannbolzen, mit einer hydraulischen Spannvorrichtung (13), die einen Spannzylinder aufweist, einem Hydraulikaggregat (20) zur Erzeugung des Druckes für die Spannvorrichtung (13) und einem Steuergerät (22), an dem ein Zielwert (Pₘₐₓ) des Druckes einstellbar ist,
**dadurch gekennzeichnet,**
**dass** das Steuergerät (22) das Hydraulikaggregat (20) derart steuert, dass dieses nach Erreichen des Zielwertes eine Absperrung der Spannvorrichtung (13) für eine vorgegebene Haltezeit (t_{H}) durchführt, und dass das Steuergerät das Hydraulikaggregat wieder aktiviert, wenn innerhalb der Haltezeit der Druck unter einen unteren Grenzwert (P_{I}) abfällt.

7. Vorrichtung nach Anspruch 6, **dadurch gekennzeichnet, dass** das Steuergerät (22) bei Ausbleiben eines Druckabfalls unter den unteren Grenzwert (P_{I}) während der Haltezeit (t_{H}) ein Signal zum Beidrehen der Mutter erzeugt.

## Claims

1. A method for joining components (10, 11) by means of tensioning bolts, comprising the following steps:
- placing a tensioning bolt (25) at the components (10, 11) to be joined,
- threading a nut (27) onto the tensioning bolt,
- stretching the tensioning bolt by means of a hydraulic tensioning device (13), supported at the components, said tensioning device being in engagement with the end of the tensioning bolt which extends beyond the nut, and
- turning the nut (27) further until it contacts one of the components (10 11),
wherein the hydraulic pressure (P) of the tensioning device (13) is monitored and the tensioning device (13) is blocked hydraulically when a hydraulic pressure target value (Pₘₐₓ) is reached during stretching,
**characterized in that**
in the event of a pressure drop during the blocking, pressure is built up again by additional pumping.

2. The method of claim 1, **characterized in that** at the beginning of the blocking a time measurement is started, and that a signal for turning the nut is generated if no pressure drop to below a lower threshold value occurs within a predetermined holding time (t_{H}) after the start of the time measurement.

3. The method of claim 1 or 2, **characterized in that** an electronic recording of the following parameters is performed:
a) the duration of the pressure build-up until the target value is reached,
b) the magnitude of the pressure and/or the chronological development of the pressure,
c) whether additional pumping has occurred.

4. The method of one of claims 1 - 3, **characterized in that** the lengthening of the threaded bolt is determined by determining the volume of the hydraulic oil pumped into the tensioning device.

5. The method of one of claims 1 - 4, **characterized in that** the hydraulic tensioning device (13) includes at least one piston (32, 33) movable in a tensioning cylinder, and that the course of the piston is calculated from the volume of delivered oil by means of a microprocessor and sensors.

6. A device for joining components by means of tensioning bolts, comprising a hydraulic tensioning device (13) having a tensioning cylinder, a hydraulic aggregate (20) for generating the pressure for the tensioning device (13) and a control device (22) at which a target value (Pₘₐₓ) of the pressure can be set,
**characterized in that**
the control device (22) controls the hydraulic aggregate (20) such that, after the target value has been reached, the control device causes a blocking of the tensioning device (13) for a predetermined holding time (t_{H}) and that the control device reactivates the hydraulic aggregate if the pressure drops below a lower threshold value (P_{I}) within the holding time.

7. The device of claim 6, **characterized in that**, if no pressure drop to below the lower threshold value (P_{I}) occurs during the holding time (t_{H}), the control device (22) generates a signal for turning the nut.

## Revendications

1. Procédé d'assemblage de composants (10, 11) par des boulons de serrage, comprenant les étapes suivantes :
- mise en place d'un boulon de serrage (25) sur les composants (10, 11) à raccorder,
- vissage d'un écrou (27) sur le boulon de serrage,
- étirage du boulon de serrage avec un dispositif de serrage (13) hydraulique qui s'appuie sur les composants et sur lequel agit l'extrémité du boulon de serrage qui dépasse l'écrou, et
- rotation de l'écrou (27) jusqu'à la butée sur un des composants (10, 11),
la pression hydraulique (P) du dispositif de serrage (13) étant surveillée, et un blocage hydraulique du dispositif de serrage (13) intervenant pendant l'étirage une fois atteinte une valeur cible (Pₘₐₓ) de la pression hydraulique,
**caractérisé en ce que**,
en cas de chute de pression pendant le blocage, une nouvelle montée en pression est effectuée par un nouveau pompage.

2. Procédé selon la revendication 1, **caractérisé en ce que**, au début du blocage, un comptage de temps est lancé, et **en ce qu'**un signal est produit pour la rotation de l'écrou si, à l'intérieur d'une durée de maintien (t_{H}) prédéfinie après le début de la mesure de temps, aucune chute de pression au-dessous d'une valeur limite inférieure n'intervient.

3. Procédé selon la revendication 1 ou 2, **caractérisé en ce qu'**un enregistrement électronique des paramètres suivants est effectué :
a) durée de la montée en pression jusqu'à l'obtention de la valeur cible,
b) valeur de la pression et/ou évolution temporelle de la pression,
c) la survenue ou non d'un nouveau pompage.

4. Procédé selon une des revendications 1 - 3, **caractérisé en ce que** l'allongement du boulon de serrage est déterminé en définissant la quantité de l'huile hydraulique pompée en direction du dispositif de serrage.

5. Procédé selon une des revendications 1 - 4, **caractérisé en ce que** le dispositif de serrage (13) hydraulique contient au moins un piston (32, 33) qui est mobile dans un cylindre de serrage, et **en ce que** la course de déplacement du piston est calculée par le biais du débit d'huile au moyen d'un microprocesseur et de capteurs de pression.

6. Dispositif destiné à l'assemblage de composants par des boulons de serrage, avec un dispositif de serrage (13) hydraulique qui présente un cylindre de serrage, avec un groupe hydraulique (20) pour la production de la pression pour le dispositif de serrage (13) et avec un appareil de commande (22) sur lequel une valeur cible (Pₘₐₓ) de la pression peut être réglée,
**caractérisé en ce que**
l'appareil de commande (22) commande le groupe hydraulique (20) de telle sorte que celui-ci, une fois atteinte la valeur cible, effectue un blocage du dispositif de serrage (13) pendant une durée de maintien (t_{H}) prédéfinie, et **en ce que** l'appareil de commande réactive le groupe hydraulique si, à l'intérieur de la durée de maintien, la pression descend au-dessous d'une valeur limite inférieure (P_{I}).

7. Dispositif selon la revendication 6, **caractérisé en ce que**, en l'absence de chute de pression sous la valeur limite inférieure (P_{I}) pendant la durée de maintien (t_{H}), l'appareil de commande (22) produit un signal pour la rotation de l'écrou.
